(19) Europäisches Patentamt
European Patent Office
Office européen des brevets

(11) Veröffentlichungsnummer: **0 019 187**
**A2**

(12) # EUROPÄISCHE PATENTANMELDUNG

(21) Anmeldenummer: 80102443.1

(22) Anmeldetag: 06.05.80

(51) Int. Cl.³: **C 07 F 9/40**
C 07 F 9/32, C 07 F 9/46
D 06 M 13/32

(30) Priorität: 09.05.79 DE 2918568

(43) Veröffentlichungstag der Anmeldung: 26.11.80 Patentblatt 80/24

(84) Benannte Vertragsstaaten: DE FR GB IT

(71) Anmelder: HOECHST AKTIENGESELLSCHAFT
Zentrale Patentabteilung Postfach 80 03 20
D-6230 Frankfurt/Main 80(DE)

(72) Erfinder: Dürsch, Walter, Dr.
In der Braubach 4
D-6240 Königstein/Taunus(DE)

(72) Erfinder: Linke, Fritz, Dr.
Im Flemetz 8
D-6240 Köningstein/Taunus(DE)

(72) Erfinder: Martini, Thomas, Dr.
Am Schellberg 42
D-6232 Bad Soden am Taunus(DE)

(54) **Organische Phosphor-Verbindungen mit 3-Hydroxyalkylphosphonsäureestergruppen, Verfahren zu deren Herstellung und deren Verwendung.**

(57) Organische Phosphor-Verbindungen mit 3-Hydroxyalkylphosphonsäureestergruppen der Formel

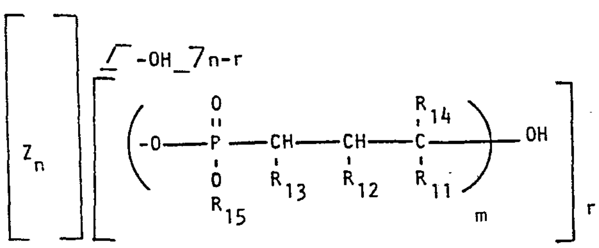

wobei die einzelnen Symbole folgende Bedeutung haben:
n ist eine ganze Zahl von 1 bis 6; r ist eine ganze Zahl von 1 bis n; m ist 1, wenn $r < n$ ist oder eine Zahl von 1 bis 150, wenn $r = n$ ist; $R_{11}$, $R_{12}$, $R_{13}$, $R_{14}$ sind Alkylreste mit 1 bis 4 Kohlenstoffatomen oder Wasserstoff; $R_{15}$ hat die gleiche Bedeutung wie $R_{11}$ außer Wasserstoff, $Z_n$ ist ein n-wertiger Rest.
Diese Verbindungen eignen sich als Thermosolierhilfsmittel und als Flammhemmittel.

EP 0 019 187 A2

Croydon Printing Company Ltd.

HOECHST AKTIENGESELLSCHAFT HOE 79/F 109 Dr.OT/St

Organische Phosphor-Verbindungen mit 3-Hydroxyalkylphosphonsäureestergruppen, Verfahren zu deren Herstellung und deren Verwendung

Der Bedarf an Phosphor-Verbindungen mit Hydroxyl-Gruppen ist in den letzten Jahren erheblich gestiegen. Z.B. sind für optimale permanente Flammhemmausrüstungen, vor allem von textilen Bodenbelägen, je nach chemischer Substrat-Beschaffenheit "maßgeschneiderte" wasserlösliche Phosphor-Verbindungen mit speziellen niederen oder höheren Hydroxyl-Zahlen, mit hohem Phosphor-Gehalt und speziellen Verzweigungsgraden notwendig. Phosphorhaltige Hydroxyl-Verbindungen sind ferner als Zwischenprodukte interessant.

Gegenstand der Erfindung sind organische Phosphor-Verbindungen mit 3-Hydroxyalkylphosphonsäuregruppen der allgemeinen Formel I

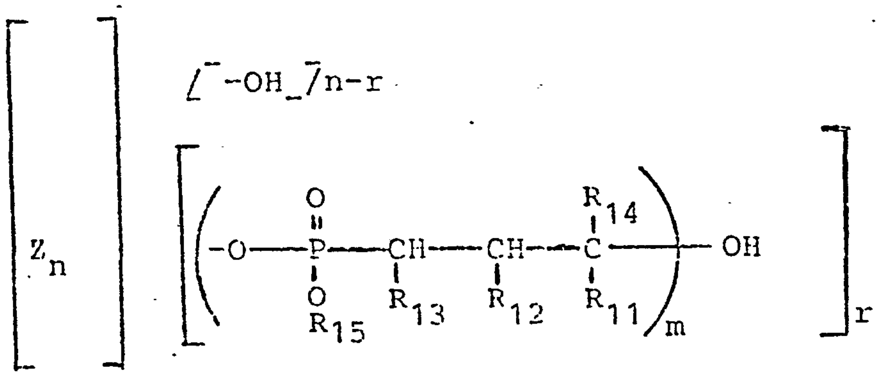

BAD ORIGINAL

wobei die einzelnen Symbole in der obigen Formel I folgende Bedeutung haben:

n ist eine ganze Zahl von 1 bis 6, vorzugsweise 1 bis 4;

r ist eine ganze Zahl von 1 bis n, also von 1 bis 6, vorzugsweise die gleiche Zahl wie n;

m ist 1, wenn $r < n$ ist oder eine Zahl von 1 bis 150, bevorzugt 2 bis 10, wenn $r = n$ ist;

$R_{11}$, $R_{12}$, $R_{13}$, $R_{14}$ sind gleiche oder verschiedene gegebenenfalls ungesättigte und/oder verzweigte Alkylreste mit 1 bis 4 Kohlenstoffatomen oder bevorzugt Wasserstoff;

$R_{15}$ hat die gleiche Bedeutung wie $R_{11}$ außer Wasserstoff, bevorzugt $(C_1$-$C_4$-)Alkyl, besonders bevorzugt Methyl;

$Z_n$ ist ein n-wertiger Rest aus der Gruppe geradkettiger oder verzweigter aliphatischer oder araliphatischer Kohlenwasserstoffreste mit 1 bis 22, vorzugsweise 1 bis 8 C-Atomen, die gegebenenfalls durch bis zu 2 -S- und/oder $NR_2$-Reste mit $R_2$= $(C_1$-$C_4$-)Alkyl, insbesondere Methyl, unterbrochen und/oder durch Fluor, Chlor, Brom-Atome, oder gegebenenfalls ungesättigte Carbonsäureestergruppen oder Carbonamid-, Carbamat- oder Harnstoffgruppen oder durch primäre, sekundäre bzw. tertiäre Aminogruppen substituiert sein können; oder ein äthergruppenhaltiger Kohlenwasserstoffrest mit Äquivalent-Gewichten bis zu 8000, bevorzugt bis zu 4000, der sich durch Oxäthylierung und/oder Oxpropylierung von n-wertigen aliphatischen araliphatischen oder aromatischen Hydroxyl-Verbindungen, Aminen oder/und Mono- bzw. Dicarbonsäuren mit 1 bis 22, vorzugsweise 1 bis 10, C-Atomen ergibt, wobei die araliphatischen bzw. die aromatischen Reste sich von Benzol, Alkyl- bzw. Alkylenbenzolen mit bis 18 C-Atomen, Naphthalin, Diphenyl, Diphenylmethan, Diphenyläthan oder 2,2-Diphenylpropan ableiten, und gegebenenfalls im Kern durch 1 oder 2 Methoxy- bzw. Äthoxygruppen bzw. im Kern und/oder in den Seitenketten durch F-, Cl-, Br-Atome, vorzugsweise bis fünfmal substituiert sein können; oder ein phosphorhaltiger Rest der allgemeinen Formel

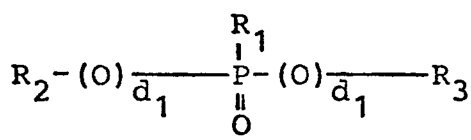

$Z_{n,1}$

in dem

$d_1$ unabhängig voneinander 0 und 1 und

$R_1$ Alkyl-, Hydroxyalkyl-, gegebenenfalls (C1-C2)-alkyliertes bzw. -dialkyliertes Aminoalkyl, Halogen- (vorzugsweise Cl-)alkyl mit 1 bis 3 C-Atomen, Alkenyl mit 2 oder 3 C-Atomen oder Phenyl, das gegebenenfalls durch 1 oder 2 Halogenatome, vorzugsweise Cl, Br substituiert sein kann, sind und

$R_2$, $R_3$ das gleiche wie $R_1$ bedeuten mit der Einschränkung, daß mindestens einer der Reste $R_2$ oder $R_3$ ein Alkylenrest mit 2 - 5 C-Atomen ist;

oder ein phosphorhaltiger Rest der Formel

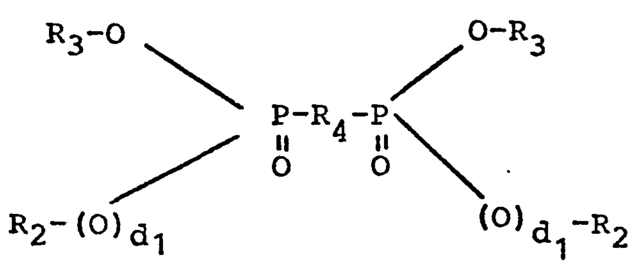

$Z_{n,2}$

in dem $d_1$, $R_2$, $R_3$ Bedeutungen wie in $Z_{n,1}$ haben und $R_4$ einen geradkettigen oder verzweigten $(C_1-C_{10}-)$Alkylen-, Phenylen-, Xylylen-Rest oder einen Rest

$-\overset{R_5}{\underset{Y}{C}}-$ mit Y = OH, $NH_2$ und $R_5$ $(C_1-C_3-)$Alkyl bedeuten;

oder ein phosphorhaltiger Rest der allgemeinen Formel

$$-CHR_{10}-CHR_9-O-\underset{\underset{O}{\|}}{C}-CHR_7-CHR_8-\overset{R_6}{\underset{\underset{O}{\|}}{P}}-O-CHR_9-CHR_{10} \qquad Z_{n,3}$$

in dem

$R_6$ eine $(C_1-C_4)$-Alkylgruppe, die gegebenenfalls durch Halogen, insbesondere Chlor, substituiert, vorzugsweise einmal substituiert sein kann, eine Cycloalkylgruppe mit bis zu 8 C-Atomen, insbesondere Cyclopentyl, Cyclohexyl, eine Alkenylgruppe mit bis zu 4 C-Atomen, insbesondere Vinyl und Allyl, eine Phenyl oder Benzylgruppe, die gegebenenfalls durch Halogen, vorzugsweise Chlor und/oder Brom, substituiert, vorzugsweise 1- bis 3-mal substituiert sein kan,

$R_7$ Wasserstoff oder eine $(C_1-C_4)$-Alkylgruppe, bevorzugt Methyl,

$R_8$ Wasserstoff oder eine $(C_1-C_2)$-Alkylgruppe, bevorzugt Methyl, wobei mindestens einer der Reste $R_7$, $R_8$ Wasserstoff ist,

$R_9$ Wasserstoff, Methyl, Chlormethyl,

$R_{10}$ Wasserstoff, Methyl oder Äthyl, vorzugsweise Wasserstoff bedeuten.

Die Verbindungen der Formel I werden erhalten, in dem man 1 Mol einer Verbindung der allgemeinen Formel II

$$Z_n\ (OH)_n \qquad (II)$$

mit 1 bis n.25 Molen von in 2-Stellung substituierten 2-Oxo-1-oxa-2-phospholanen der allgemeinen Formel III

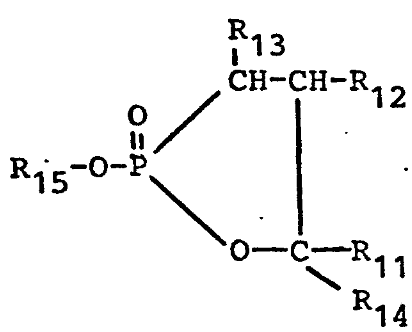

(III)

umsetzt, wobei n, $R_{11}$, $R_{12}$, $R_{13}$, $R_{14}$ und $R_{15}$ und $Z_n$ die oben angegebenen Bedeutungen haben.

Die Alkohole der Formel II $Z_n(-OH)_n$ sind alle nach bekannten Methoden zugänglich. Von den einsetzbaren einwertigen organischen Hydroxylverbindungen mit n=1 kommen z.B. alle leicht zugänglichen aliphatischen geradkettigen oder verzweigten Alkohole mit 1 bis 22 C-Atomen in Betracht. Als wichtigste seien z.B. genannt: Methanol, Äthanol, n-Propanol, i-Propanol, n-Butanol, sec.-Butanol, n-Hexanol, 2-Äthyl-butanol-1, n-Octanol, 2-Äthyl-hexanol-1, n-Dodecanol, n-Hexadecanol, n-Octadecanol, wobei die Alkohole mit 1 bis 4 C-Atomen bevorzugt sind. Noch besser als monofunktionelle Alkohole sind mehrwertige mit n = 2 - 6 geeignet.

Von den mehrwertigen aliphatischen Polyolen mit n = 2 - 6 seien z.B. genannt: Äthylenglykol, 1,2-Propylenglykol, 1,3-Propylenglykol, 1,4-Butandiol, Neopentylglykol, 1,6-Hexandiol, Glyzerin, Trishydroxymethyläthan, Trishydroxymethylpropan, Pentaerythrit, Sorbit, Mannit. Insbesondere sind Glyzerin und 1,4-Butandiol geeignet.

Von ungesättigten Alkoholen seien z.B. genannt: n-Buten-2-ol-1, 2,4-Buten-diol und Allylalkohol, wobei 1,4-Butendiol als zweiwertiger Alkohol bevorzugt ist.

Von den zahlreichen Verbindungen, bei denen in einem aliphatischen Kohlenwasserstoffrest eine oder mehrere $-CH_2-$Gruppen durch Ätherbrücken -O- ersetzt sind, sind z.B. geeignet die Umsetzungsprodukte von einwertigen Alkoholen mit einem oder mehreren Molekülen von Alkylenoxiden oder Alkylencarbonaten, wie z.B. 2-Methoxyäthanol, 2-Äthoxyäthanol, 2-n-Butoxy-äthanol, 2-(2'-Äthyl-hexyloxy)-äthanol, 2-n-Dodecyloxy-äthanol, ferner die Umsetzungsprodukte von 1 Mol Methanol, 1 Mol Äthanol oder 1 Mol Isopropanol und 2 Mol Äthylenoxid oder Äthylencarbonat sog. Methyldiglykol, Äthyldiglykol bzw. Isopropyldiglykol, ferner Umsetzungsprodukte von 3 bis 100 Molekülen Äthylenoxid oder Äthylencarbonat mit 1 Mol Methanol, Äthanol, Isobutanol, Dodecanol, Oleylalkohol, etc.

Geeignete Umsetzungsprodukte von Äthylenoxid und zweiwertigen Alkoholen sind z.B. sog. Diglykol, sog. Triglykol und die höheren Umsetzungsprodukte von Äthylenoxid und/oder Äthylencarbonat mit Wasser oder Äthylenglykol, die sog. Polyäthylenglykole verschiedener Molekülgrößen bis zum mittleren Molekulargewicht von 8 000, insbesondere Diglykol und Triglykol, ferner sind geeignet, z.B. die Addukte von 1 bis 150 Molekülen Äthylenoxid und/oder Äthylencarbonat mit drei- oder höher-wertigen Alkoholen (n = 3-6), wie z.B. Glyzerin, Trishydroxymethylpropan, Pentaerythrit etc.

Neben Umsetzungsprodukten von Äthylenoxid und/oder Äthylencarbonat an ein- oder mehrwertige Alkohole kommen auch Umsetzungsprodukte aus ein- und mehrwertigen Alkoholen mit anderen 1,2-Alkylenoxiden und/oder 1,2-Alkylencarbonaten, wie vor allem 1,2-Propylenoxid, 1,2-Propylencarbonat oder Epichlorhydrin, in Betracht, ebenso die Umsetzungsprodukte von Äthylenoxid und/oder Äthylencarbonat mit Poly-1,2-propylenglykolen, die wie bekannt als oberflächenaktive Verbindungen in großer Variationsbreite hergestellt werden. Besonders erwähnt seien entsprechende Addukte von Äthylenoxid und/oder Äthylencarbonat an Poly-1,2-propylenglykole mit Molgewichten bis zu 8 000, bevorzugt bis zu 4 000.

Neben -O-Brücken kann die Kohlenwasserstoffkette von aliphatischen Hydroxylverbindungen auch durch andere Heteroatome, wie z.B. durch die Elemente N, S und/oder P oder Carbonsäureestergruppen unterbrochen bzw. substituiert sein. Diese Verbindungen können z.B. besonders einfach durch Umsetzung von einem oder mehreren Molekülen von 1,2-Alkylenoxiden und/oder 1,2-Alkylencarbonaten mit Ammoniak, primären oder sekundären Aminen, Schwefelwasserstoff, Merkaptanen und mit Sauerstoffsäuren des Phosphors, ($C_2$-$C_6$)-Carbonsäuren bzw. Dicarbonsäuren erhalten werden.

Von deren Umsetzungsprodukten mit 1,2-Alkylenoxiden bzw. 1,2-Alkylencarbonaten seien z.B. genannt:

Mit N im Molekül: Monoäthanolamin, Diäthanolamin, Di-propanol-2-amin, tertiäre Alkanolamine, wie z.B. Triäthanolamin, Methyldiäthanolamin, n-Butyl-diäthanolamin, Tetrahydroxyäthyläthylendiamin, Pentahydroxyäthyl-diäthylentriamin, n-Dodexyldiäthanolamin, Dimethyläthanolamin, n-Butylmethyläthanolamin, Di-n-butyl-äthanolamin, n-Dodecylmethyläthanolamin und entsprechend höhere Umsetzungsprodukte dieser tertiären Amine mit bis zu 150 Molen Äthylenoxid bzw. Äthylencarbonat oder Propylenoxid bzw. Propylencarbonat.

Mit S im Molekül: Bis-(2-hydroxyäthyl)-sulfid, Bis-(2-hydroxypropyl)-sulfid, Bis-(2-hydroxyäthyl)-sulfon und ihre Umsetzungsprodukte mit weiterem Äthylenoxid bzw. Äthylencarbonat oder Propylenoxid bzw. Propylencarbonat bis zu Molgewichten von 8 000.

Mit P im Molekül: Neutrale Umsetzungsprodukte von 1,2-Alkylenoxiden, wie Äthylenoxid, Propylenoxid, Epichlorhydrin, vor allem Äthylenoxid oder Äthylencarbonat im ein- und mehrwertigen Alkanphosphonsäuren mit 1 bis 18 C-Atomen, wie z.B. mit n-Butan-, Isobutan-, 2-Äthyl-hexan-, n-Octan-, Decan-, Dodecan-, Tetradecan-phosphonsäure, insbesondere aber mit Methan-, Äthan-, Propan- und Vinylphosphonsäure und 1,2-Äthandiphosphonsäure, ferner mit ein- oder mehrwertigen Dialkyl-phosphinsäuren, wie z.B. Methyl-butylphosphinsäure, Methyl-n-octyl-phosphinsäure, Methyl-n-dodecylphosphinsäure und besonders Dimethyl-, Äthyl-methyl-, Methyl-propyl-, Methyl-vinyl-phosphinsäure und Äthan-1,2-bis-(methyl-phosphinsäure) und ferner auch Umsetzungsprodukte von 1 bis 7 Mol Alkylenoxid oder Äthylencarbonat mit

einwertigen aliphatischen Carbonsäuren, wie z.B. Crotonsäure, vor allem Essigsäure, Propionsäure, Buttersäure und mehrwertige aliphatische Carbonsäuren, wie z.B. Bernsteinsäure und Adipinsäure.

Neben derartigen durch Oxyalkylierungsreaktionen sehr leicht zugänglichen Hydroxylverbindungen mit Heteroatomen N, S und P sind noch zahlreiche weitere Verbindungen mit Hydroxylgruppen und gegebenenfalls diesen Heteroatomen und/oder Carbonsäureestergruppen in der Kohlenwasserstoffkette geeignet, von denen nur genannt seien z.B. Oligo-Kondensate, die entstehen durch Umsetzung von Dicarbonsäuren mit mehrwertigen Alkoholen, ferner Glykolsäuremethylester, 2-Hydroxyäthan-carbonsäureäthylester etc.

Geeignet sind außerdem z.B. Hydroxymethan-phosphonsäuredimethylester, 2-Hydroxyäthan-phosphonsäurediäthylester, 3-Hydroxypropan-phosphonsäure-di-n-butylester etc. und analoge Verbindungen aus der Phosphinsäurereihe, wie z.B. Hydroxymethyl-methyl-phosphinsäure-methylester, 2-Hydroxyäthyl-methyl-phosphinsäure-äthylester, 3-Hydroxypropylmethyl-phosphinsäure-2'-äthyl-hexylester, Hydroxymethyldimethyl-phosphinoxid, 2-Hydroxyäthyl-dimethyl-phosphinoxid.

Alle genannten und nicht genannten analogen aliphatischen Hydroxylverbindungen können durch die Halogenatome Chlor, Brom, Fluor, besonders durch Chlor oder Brom, substituiert sein. Erwähnt seien z.B. die leicht zugänglichen und wegen ihres günstigen Flammschutzverhaltens interessanten Verbindungen 2-Bromäthanol, 2,3-Dibrompropanol-1, 2,3-Dibrombutandiol-1, Dibrombernsteinsäure-bis-(2-hydroxyäthyl)-ester, 2,3-Dibrompropan-phosphonsäure-bis-(2-hydroxy-äthyl)-ester, 2-Hydroxyäthanphosphonsäure-bis-(2,3-dibrompropyl)-ester, ferner Chloräthanol, 2,3-Dichlor-propanol-1, 1,3-Dichlorpropanol-2, 2,3-Dichlor-butandiol-1,4, 2-Hydroxyäthanphosphonsäure-bis(2,3-dichlorpropyl)-ester, 1-Chlor-vinylphosphonsäure-bis-(2-hydroxyäthyl)-ester etc.

Sehr mannigfaltig ist auch die Auswahl der geeigneten äthergruppenhaltigen aromatischen Verbindungen, die n OH-Reste tragen. Es kommen in Betracht alle Oxalkylierungsprodukte von sogenannten Phenolen im weiteren Sinne, wie z.B. Phenol, Brenzcatechin, Resorcin, Hydrochinon, Pyrogallol, Oxhydrochinon, Phloroglucin, die verschiedenen Tetra- und Pentahydroxybenzole, Hexaoxybenzol, α-Naphthol, ß-Naphthol, ferner von Hydroxynaphthalinen mit mehr als einer Hydroxylgruppe, wie z.B. 1,2-, 1,3-, 1,4-, 1,5-, 1,6-, 1,7-, 1,8-, 2,3-Dihydroxy-naphthalin, ferner 4-Hydroxydiphenyl, 4,4'-Dihydroxydiphenyl und - wegen des günstigen Preises - vor allem von 2,2-Bis-(4-hydroxyphenyl)-propan und 4,4'-Bis-(4-hydroxyphenyl)-methan mit Molen bis zu 8 000. Auch die Oxalkylate teilverätherteter mehrwertiger aromatischer Hydroxylverbindungen, wie z.B. Hydrochinon-monomethyläther, Resorcinmono-äthyläther etc., sind geeignet.

Wegen der günstigen Beeinflussung der Flammschutzeigenschaften sind aromatische Chlor- und besonders Brom-hydroxy-Verbindungen von besonderem Interesse, wie z.B. die 2-Hydroxy-äthyläther von 2,4,6-Tribrom-phenol, Pentabrom-phenol 2,4,6-Trichlor-phenyol oder Pentachlorphenol und von 2,2-Bis-(4-hydroxy-3,5-dibromphenyl)-propan.

Geeignet sind ferner die Oxalkylate aromatischer Hydroxyverbindungen mit Alkyl-Seitengruppen mit insgesamt bis zu 18 C-Atomen, wie z.B. von o-, m- bzw. o-Kresol, Thymol, 4-tert.-Butylphenyol, n-Nonylphenyol, Isotridecylphenol mit Molgewichten bis zu 8 000.

Unter den araliphatischen und aromatischen Verbindungen sind ferner geeignet alle araliphatischen Verbindungen mit alkoholischen Hydroxylgruppen, wie z.B. Benzylalkohol und alle 2-Hydroxyalkyl-ester, die durch Oxyalkylierungen von aromatischen Verbindungen, die freie Carbonsäure-, Phosphonsäure- oder Phosphinsäurereste erhalten, entstehen.

Zur Herstellung von aromatischen Ausgangsmaterialien II mit alkoholischen Hydroxylgruppen kommen außer den bereits aufgeführten aromatischen Verbindungen mit phenolischen Hydroxylgruppen für die Umsetzung mit 1,2-Alkylenoxiden oder 1,2-Alkylencarbonaten daher vor allem z.B. aromatische Mono- und Dicarbonsäuren, wie z.B. Benzoesäure, Phthalsäure, Isophthalsäure, Terephthalsäure, 1-Naphthalindicarbonsäuren, aber auch aromatische Hydroxycarbonsäure wie z.B. die drei verschiedenen Hydroxy-benzoesäuren, die verschiedenen Naphthol-carbonsäuren, 4,4'-Diphenyl-dicarbonsäure etc. in Betracht.

Ebenso sind z.B. alle anderen Brom, Chlor oder Fluor enthaltenden aromatischen Carbonsäuren, die sich von Benzol und Naphthalin ableiten, wie vor allem z.B. Tetrabrom- bzw. Tetrachlornaphthalsäure geeignet.

Ebenso können aromatische Phosphon- bzw. Phosphinsäuren, wie z.B. Benzolphosphonsäure, 1,3- bzw. 1,4-Phenylen-diphosphonsäure, Phenyl-methyl-phosphinsäure, 1,3- bzw. 1,4-Phenylen-bis-(methyl-phosphinsäure) etc. durch Umsetzung mit den 1,2-Alkylenoxiden und/oder 1,2-Alkylencarbonaten in die entsprechenden 2-Hydroxyalkylester übergeführt werden.

Geeignete aromatische Verbindungen mit alkoholischen Hydroxylgruppen können aber auch durch vorhergehende Umsetzung von aromatischen Aminen oder Merkapto-Verbindungen mit 1,2-Alkylenoxiden und/oder 1,2-Alkylencarbonaten erhalten werden.

An für Oxalkylierungen geeigneten, aromatischen Aminogruppen enthaltenden Verbindungen seien z.B. genannt:
Anilin, Methylanilin, o-, m-, p-Phenylendiamin, die diversen o-, m-, p-Toluidine und -Anisidine, -Aminophenole, -Aminobenzoesäuren, Naphthylamine, die diversen Aminonaphthole, ferner 4,4'-Diaminodiphenylmethan, 4,4'-Benzidin, die möglichen Chlor- bzw. Bromaniline und vor allem

2,4,6-Tribromanilin etc., aber auch Phenylalkylamine, wie vor allem Benzylamin oder Methylbenzylamin und Dibenzylamin.

Die aromatischen oxalkylierbaren Merkaptoverbindungen seien z.B. angeführt:
Phenylmerkaptan, p-Toluyl-merkaptan, 1- bzw. 2-Naphthylmerkaptan etc.

Unter allen Verbindungen II mit alkoholischen Hydroxylgruppen besonders bevorzugt sind solche, die zusätzlich vernetzungsfähige methylolisierbare oder polymerisierbare Reste enthalten, wie z.B. 2-Hydroxyäthyl-carbamat, 2-Hydroxyäthyl-harnstoff, 2-Hydroxyäthyl-methacrylsäureester etc.

Man kann jeweils nur eine Verbindung der Formel II einsetzen, jedoch ist es auch möglich, Mischungen von mehreren Verbindungen II zu verwenden. Man erhält dann entsprechende Mischungen der Verbindungen I.

Die in 2-Stellung substituierten 2-Oxo-oxa-phospholane der Formel III können z.B. erhalten werden durch Addition von Dialkylphosphorigsäureestern der Formel IV

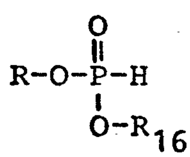 (IV)

wobei $R_{16}$ einen Alkylrest mit 1–6, bevorzugt 1–4 Kohlenstoffatomen bedeutet und einwertigen ungesättigten Alkoholen der allgemeinen Formel V

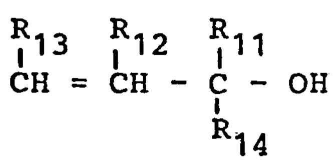 (V)

bei Gegenwart von Radikalspendern und Temperaturen von ca. 100 - 150°C. Aus den dabei primär entstehenden 3-Hydroxyalkylphosphonsäure-alkylestern der allgemeinen Formel VI

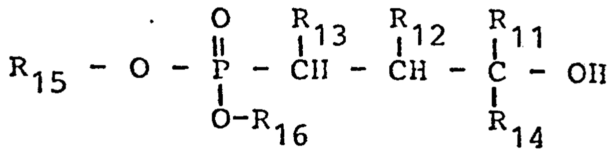 (VI)

entstehen beim Erhitzen unter Abspaltung von Alkoholen der Formel VII

$$R_{16}\text{-}OH \qquad (VII)$$

neben oligomeren Addukten auch die Verbindungen der Formel III.

Diese 2-substituierten 2-Oxo-oxa-phospholane können aus dem Reaktionsgemisch herausdestilliert werden. Diese Verbindungen können aber auch durch Abspaltung von Alkylhalogenid aus 3-Halogen-propanphosphosäure-di-estern erhalten werden.

Im einzelnen sind von den Verbindungen III z.B. geeignet:

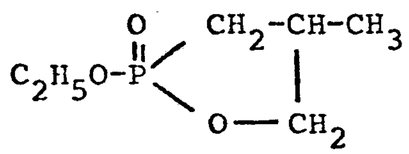

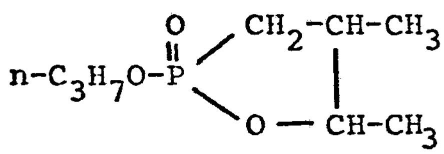

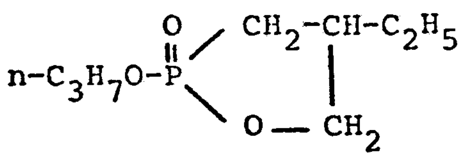

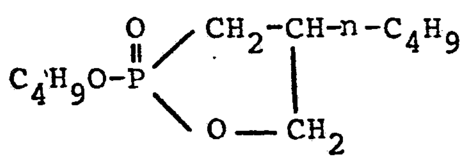

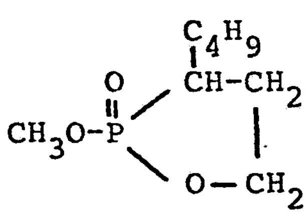

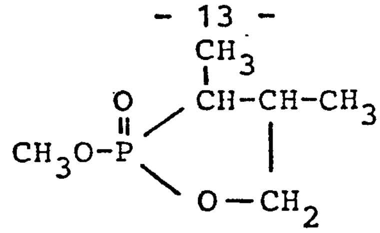

bevorzugt 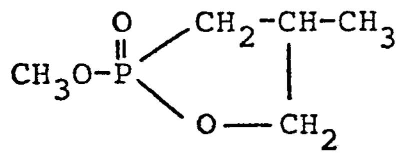 und

besonders bevorzugt 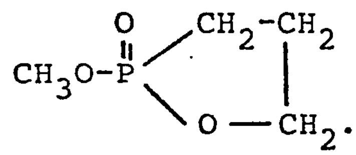

Man kann jeweils nur eine Verbindung der Formel III einsetzen. Es ist jedoch auch möglich, Mischungen mehrerer Verbindungen der Formel III zu verwenden. Man erhält dann Mischungen der Verbindungen der Formel I.

Die Molverhältnisse zwischen den 2-substituierten 2-Oxo-oxa-phospholanen III und den Alkoholen II können - je nach dem gewünschten Phosphor- und Hydroxyl-Gruppen-Gehalt - in weiten Grenzen schwanken. Sie können liegen zwischen 1 und n.m. Das heißt 1 Mol eines Alkohols $Z_n(-OH)_n$ kann mit bis n.m (bzw. 150·n) Molen von III umgesetzt werden. Je größer m ist, um so höher wird der P-Gehalt der Reaktionsprodukte und um so niedriger werden die Hydroxylgruppen-Gehalte bzw. die "Hydroxyl-Zahlen" (OHZ). Pro Hydroxylgruppe können maximal bis zu m = 150 Mole, bevorzugt m = 2 - 10 Mole III addiert werden.

Die Umsetzungen der Verbindungen II und III müssen bei Abwesenheit von Wasser durchgeführt werden. In vielen Fällen, vor allem wenn die Verbindungen II und III niedrigviskose Flüssigkeiten sind, ist die Verwendung von Lösungsmitteln überflüssig. Wenn es sich bei den Verbindungen II und/oder III jedoch um Substanzen handelt, die bei den gewählten Reaktionstemperaturen fest sind, empfiehlt sich die Zugabe von wasserfreien inerten, relativ polaren

Lösungs- bzw. Verdünnungsmitteln, die möglichst leicht flüchtig sein sollen, wie vor allem z.B. von Tetrahydrofuran, Dioxan, Aceton, 1,2-Dimethoxy-äthan, Acetonitril etc. Nach Durchführung der Umsetzungen müssen sie möglichst schonend - gegebenenfalls im Vakuum - wieder entfernt werden.

Die Reaktion kann auch bei Abwesenheit von Katalysatoren durchgeführt werden. Jedoch wirken alkalische Katalysatoren stark reaktionsbeschleunigend. Als stark alkalische Katalysatoren kommen besonders in Betracht die Alkalimetalle Lithium, Kalium und bevorzugt Natrium, Natriumamid und bevorzugt Natriumhydrid und Alkalialkoholate, wie vor allem Natriumäthylat und - wegen der geringen Verfärbungen - Natriummethylat in Form von hochprozentigen Lösungen in Methanol. Durch Mischen von Natriumethylat-Lösung mit den Verbindungen I und Abziehen des Methanols im Vakuum bei möglichst niederen Temperaturen, können z.B. sehr bequem Alkoholate des verwendeten Alkohols II erzeugt werden, die sich als alkalische Katalysatoren hervorragend eignen. Schwach alkalische Katalysatoren, wie z.B. Soda oder Pottasche beschleunigen die Reaktion nur bei erhöhten Temperaturen von ca. 60-200°C.

Die Mol-Mengen an Alkalikatalysatoren richten sich besonders nach der Anzahl der Mole an Verbindungen III.

Pro Mol der Verbindungen III empfiehlt sich der Einsatz von 0,002 - 0,5 Mol, bevorzugt 0,01 bis 0,2 Mol, an Alkalikatalysatoren.

Durch Nebenreaktionen, vor allem durch Verseifung von Phosphonsäureestergruppen, wird ein Teil des Alkalikatalysatorsverbraucht. Um zu erkennen, ob noch ausreichende Mengen an freiem Alkali vorhanden sind, empfiehlt es sich Indikatoren, bevorzugt im Neutral-Bereich farblose Indikatoren, wie z.B. Phenolphthalein oder bevorzugt Thymolphthalein, zuzusetzen.

Falls erforderlich, kann überschüssigesfreies Alkai durch Zugabe berechneter Mengen von anorganischen oder organischen Säuren bzw. Säurespendern, wie z.B. Schwefelsäure, Phosphorsäure, Äthanphosphonsäure, Essigsäure, Oxalsäure, Essigsäureanhydrid etc. nach Ende der Reaktion neutralisiert werden.

Die Reaktionstemperaturen können schwanken zwischen ca. -10°C und 200°C. Sie sind sehr abhängig von der Tatsache, ob überhaupt Alkali-Katalysatoren verwendet werden und ob das Reaktionsmedium alkalisch ist oder nicht. Bevorzugte Temperatur-Bereiche sind bei Abwesenheit von Katalysatoren 100°C bis 170°C, bei Anwesenheit von stark alkalischen Katalysatoren, d.h. im alkalischen Medium, 10°C bis 60°C. Die Reaktionszeiten liegen bei 1 Minute bis ca. 48 Stunden, bevorzugt 5 Minuten bis 20 Stunden. Bei höheren Temperaturen, besonders bei Abwesenheit von Alkali-Katalysatoren bzw. Neutral- und im schwach sauren pH-Bereich, sind wesentlich längere Reaktionszeiten von bevorzugt ca. 1 bis 20 Stunden notwendig. Bei Gegenwart von starken Alkali-Katalysatoren genügen bevorzugt 5 Minuten bis 2 Stunden. Die Reaktion ist hierbei, besonders wenn kleine Moleküle von II und III eingesetzt werden, zum Teil stark exotherm, so daß während der Zugabe von III zu II gegebenenfalls intensiv gekühlt werden muß und sich die portionsweise Zugabe der Verbindungen III zu den Mischungen aus den Alkoholen II und den entsprechenden Alkoholaten besonders empfiehlt. Es ist zwar auch möglich, die Verbindungen II und III zu mischen und Lösungen von Alkali-Katalysatoren (z.B. Natriummethylat- Lösungen in Methanol) zuzutropfen. Jedoch besteht dabei stets die Gefahr von Überhitzungen des Reaktionsgemischs und/oder (meist unerwünschter) Verseifungen erheblicher Anteile an Phosphonsäureestergruppen. Ähnliches gilt für den Fall, daß nur die 2- substituierten 2-Oxo-oxa-phospholane III vorgelegt und die Alkohole II, in Mischung oder gleichzeitig mit den Alkalikatalysatoren langsam eingetragen werden. Die Reaktion wird bei niederen

Reaktionstemperaturen stets unterbrochen, wenn der pH-Wert unter ca. 5 bis 7 abfällt (gemessen mit feuchtem Indikatorpapier).

Die erhaltenen Reaktionsprodukte von der Formel II sind meist farblose Öle, manchmal, z.B. bei Verwendung von längerkettigen gesättigten Fettalkoholen, aber auch pasten- bzw. wachsartig. Ihre Hydroxyl-Zahlen (in mg KOH pro Gramm) können in weiten Grenzen schwanken zwischen ca. 10 bis ca. 900, bevorzugt zwischen 40 und 300.

Bemerkenswert ist, daß bei dem bevorzugten Herstellverfahren, d.h., im alkalischen pH-Bereich, sich die Addition der Verbindungen III und die Alkohole II bereits bei relativ sehr niederen Reaktionstemperaturen sehr glatt und schnell vollzieht und außerdem primäre und sekundäre Aminogruppen nicht reagieren. Dadurch können auch Alkohole II zum Einsatz kommen, die beliebige Aminogruppen oder thermisch nicht belastbare Reste, wie z.B. Methacryl-, Carbamat-, und Harnstoffreste etc., enthalten.

Die Verbindungen der Formel I sind z.B. geeignet als Thermosolierhilfsmittel für optische Aufheller. Sie sind aber auch wertvolle Zwischenprodukte für zahlreiche Phosphororganika. Von besonderem Interesse ist hierbei auch die Tatsache, daß durch Umsetzung mit nieder-molekularen Verbindungen der Formel III auch solche Alkohole der Formel II in wasserlösliche Addukte überführt werden können, die von Natur aus, beispielsweise durch eine längerkettige Alkylgruppe, nicht wasserlöslich sind. Man kann die Verbindungen I, vor allem, wenn sie sich von niedermolekularen mehrwertigen oder einwertigen vernetzbaren aliphatischen Alkoholen ableiten, jedoch auch direkt als Flammhemmittel für Textilmaterial verwenden. Zu diesem Zweck werden sie mit reaktiven Vernetzungsmitteln, gegebenenfalls in Gegenwart von Vernetzungskatalysatoren, auf dem Textilmaterial nach bekannten Verfahren fixiert. Man erhält auf diese Weise einen ausgezeichneten flammhemmenden Effekt.

Die erfindungsgemäßen Verbindungen I, können, da sie endständige Hydroxylgruppen enthalten, mit mehrfunktionellen N-Methylolverbindungen von Melamin, Harnstoff oder cyclischen Harnstoffverbindungen in Gegenwart von sauren Katalysatoren permanent vernetzt werden. Enthalten die Verbindungen I dagegen endständige Vinylgruppen, so können sie zusammen mit anderen oder ohne andere vinylgruppenhaltige Verbindungen im Beisein eines Polymeridationskatalysators polymerisiert bzw. copolymerisiert werden. Auch die auf diese Weise erhaltenen hochpolymeren Verbindungen zeichnen sich auf verschiedenen Textilmaterialien durch eine gute Permanenz aus.

Als vernetzende mehrfunktionelle N-Methylolverbindungen kommen in Frage z.B. Derivate von Amino-1,3,5-triazinen, wie Trimethylolmelamin, Hexamethylolmelamin, Trimethylolmelamintrimethyläther, Hexamethylolmelamin-pentamethyläther, Trimethylolmelamin-triisobutyläther, Dimethylolaceto-guanamin, ferner Derivate des Harnstoffs wie Dimethylolharnstoff, Dimethylolharnstoffdimethyläther, Dimethylolharnstoffbutyläther, Dimethylolcycloäthylenharnstoff, Dimethylolcyclopropylenharnstoff, Dimethylol-4-methoxy-5-dimethylpropylenharnstoff, Dimethylol-5-hydroxypropylenharnstoff, 1,3-Dimethylol-4,5-dihydroxy-imidazolidon-(2), 1,3-Dimethylol-5-hydroxyäthylhexahydrotriazin-on-(2), Dimethyloluron und Dimethylolcarbamate, wie z.B. Dimethylolmethylcarbamat, Dimethylol-hydroxyäthylcarbamat und Dimethylolmethoxyäthylcarbamat.

Interessante Verbindungen, die sich besonders bewährt haben, sind die Melaminderivate, z.B. Trimethylolmelamintrimethyläther oder Hexamethylolmelaminpentamethyläther.

Als Katalysatoren, die im sauren pH-Bereich ihre Wirkung zeigen, werden im allgemeinen ca. 0,2 bis 5 Gew.-%, bevorzugt 0,4 bis 3 Gew.-%, anorganische oder organische Säuren zugesetzt oder deren Salze, die durch Hydrolyse oder durch eine Hitzebehandlung Säure freisetzen, wie z.B. Schwefelsäure, Salzsäure, Phosphorsäure, Trichloressigsäure,

Maleinsäure, Weinsäure, Zitronensäure, Essigsäure oder deren Salze mit Ammoniak, Aminen oder mehrwertigen Metallen, vorzugsweise Salze von starken oder mittelstarken Säuren, wie Ammoniumsulfat, Ammoniumchlorid, Mono- und Diammoniumoxalat, Ammoniumnitriat, Magnesiumchlorid, Aluminiumchlorid, Zinkchlorid, Zinknitrat, Zinkfluoroborat, 2-Amino-2-methyl-propanol-hydrochlorid.

Die Vernetzungskatalysatoren können für sich allein oder in Mischungen untereinander den Ausrüstungsflotten zugesetzt werden. Solche - bevorzugt wäßrige - Ausrünstungsflotten enthalten im allgemeinen 2 bis 5 Gew.-%, vorzugsweise 2,5 bis 4,5 Gew.-%, von Verbindungen der Formel I, ferner 5 bis 10 Gew.-%, vorzugsweise 7 bis 9 Gew.-%, vernetzende Substanzen, wie vorstehend angegeben, ferner 0,2 bis 5 Gew.-% Vernetzungskatalysatoren, sowie gegebenenfalls 5 bis 25 Gew.-% an Hochpolymeren, bevorzugt in Form von Dispersionen.

Wenn die erfindungsgemäßen Phosphorverbindungen Vinylgruppen enthalten, zeichnen sie sich durch eine gute Polymerisationsfähigkeit auf Textilsubstraten verschiedener Zusammensetzung aus. Die Polymerisation findet auch ohne Inertgasschutz und in Anwesenheit von Luftsauerstoff auf Textilsubstraten unter textiltechnischen Bedingungen, selbst bei einer sehr großen Substratoberfläche statt. Die auf diese Weise erhaltenen Polymerisate geben den verschiedensten textilen Flächengebilden einen sehr guten Flammschutz. Als Polymerisationskatalysatoren werden den Ausrüstungsflotten im allgemeinen Radikalspender zugesetzt. Es ist jedoch auch möglich, z.B. während der Behandlung mit energiereichen Strahlen Radikale auf dem Fasermaterial zu erzeugen.

Als Polymerisationskatalysatoren werden die für die Polymerisation von Acrylaten bekannten Verbindungen verwendet, also für wäßrige Ausrüstungsflotten z.B. Kalium- oder Ammonium-peroxidsulfat (-persulfat), Wasserstoffperoxid

oder Wasserstoffperoxidspender wie $NH_4P_2O_7 \cdot H_2O_2 \cdot H_2O$ oder $(NH_2CONH_2) . H_2O_2$ (in den Beispielen als Carbamid-Wasserstoffperoxid bezeichnet), ferner auch Redoxkatalysator-Systeme, wie Wasserstoffperoxid und Ascorbinsäure oder Natriumbisulfit, Mangan(III)chlorid oder Eisen(II)-chlorid und Natriumsulfit, Natriumchlorat/Natriumbisulfit, Natriumperoxidsulfat/Natriumbisulfit.

Zur Erhöhung der Permanenz, insbesondere der Waschbeständigkeit des erfindungsgemäßen erhaltenen Flammschutzes ist es von besonderem Vorteil, den Monomeren der Formel I weitere Comonomere zuzusetzen, insbesondere solche, die vernetzend wirken. Beispiele für solche Comonomere sind vor allem Acrylamid, N-Methylol-acryl-amid, Methylen-bisacrylamid, N-Methylol-methylbisacrylamid, N,N'-Dimethylol-methylen-bisacrylamid, N-Formamidomethyl-acrylamid, Divinylbenzole, Triallylcyanursäureester, Imide und Anhydride der Acrylsäure und Methacrylsäure, 1,3,5-triazin. Verwendet man -C=C-gruppenhaltige Comonomere, die noch andere reaktionsfähige Gruppen besitzen, z.B. Acrylamid oder N-Methylolhaltige Verbindungen wie z.B. N-Methylolmethylenbisacrylamid, N,N'-Dimethyloldimethylenbisacrylamid, so können noch weitere bzw. zusätzliche Vernetzungskomponenten dem System zugesetzt werden, wie z.B. Derivate von Amino-1,3-5-triazinen wie Trimethylolmelamin, Hexamethylolmelamin, Hexamethylolmelamin-pentamethyläther, ferner Derivate des Harnstoffes, wie Dimethylolharnstoff, Dimethylolharnstoffdimethyläther, Dimethylolcycloäthylenharnstoff, Dimethylolcyclopropylenharnstoff, Dimethylolcarbamate, z.B. Dimethylolmethylcarbamat, Dimethyloläthylcarbamat etc.

Insgesamt betragen diese Zusätze zu den Monomeren der Formel I 10 - 300 Gew.-Teile, vorzugsweise 30 bis 180 Gew.-Teile, insbesondere 40 - 120 Gew.-Teile auf 1000 Gew.-Teile Substrat.

Das textile Fasergut, auf dem die flammhemmende Ausrüstungen nach den oben beschriebenen Vernetzungsmöglichkeiten, sowohl nach dem Kondensations- als auch nach dem Polymerisationsverfahren, durchgeführt werden kann, ist verschieden. Es kommen Gewebe, Gewirke, Non-woven-fabrics, z.B. Nadelvliese für Wand- und Bodenbeläge und Tufting- bzw. Webteppiche in Frage. Gewebe bzw. Gewirke können aus nativen oder regenerierten Cellulosefasern oder aus Synthesefasern, z.B. Nadelvliesauslegeware aus 100 % Polyamid 6-Fasern, aus Polyester/Polyamidfasern 50/50 oder solche, die einen Polyesterkern (Unterseite) besitzen und eine Lauffläche aus Polyamid 6-Fasern, Polyamidfasern und Viskose-Zellwolle 50/50, Polyesterfasern und Viskose-Zellwolle 50/50, und Polyesterfasern 100 %ig.

Gute permanente Flammschutzeffekte werden auch auf Fasergut erzielt, das aus 100 % Polypropylenfasern oder auch Polypropylenfasern-Mischgut z.B. mit Polyester- oder Polyamid- oder Cellulosefasern besteht.

Es werden auch sehr gute flammhemmende Effekte erzielt, wenn man die flammhemmenden phosphororganischen Verbindungen mit den vorgenannten Vernetzungsprodukten und Katalysatoren in eine Vorstrichimprägnierflotte bei Tufting-Teppichen oder in eine Rückenappreturflotte für Webteppiche einbaut.
Das Grundgewebe der Tufting-Teppiche kann aus Baumwolle, Jute, Zellwolle, Wolle oder Synthesefasern auf Basis Polyamid, Polyester, Polypropylen oder in Mischung, oder aus Glasfasern bestehen. Vernadelte Vliesstoffe aus Polyester oder Polypropylenfasern eignen sich ebenfalls ausgezeichnet als Grundgewebe. Der getuftete Flor (Schlingen- oder Schnittflor) kann aus Polyamid-, Polyester-, oder aus Polyacrilnitrilfasern bestehen. Mischungen aus Polyacrylnitrilfasern mit z.B. 20 % Polyesterfasern haben sich ebenfalls bewährt.

Zur Griffgestaltung, zur Erzielung einer guten Formbeständigkeit, zur Verbesserung des Abriebs und der Trittfestigkeit von Nadelvliesauslegeware werden den Ausrüstungsflotten hochpolymere Kunststoffdispersionen zugesetzt.

Die Einbindung der Florfäden bei einer Tuftedware in das oben beschriebene Grundgewebe erfolgt durch den sogenannten Vorstrich mit hochpolymeren Kunststoffdispersionen, denen die erfindungsgemäßen flammhemmenden Komponenten, Vernetzer und Katalysatoren zugesetzt werden.

Als Kunststoffdispersionen kommen in Frage Polyvinylacetat, Polyvinylacetat mit Kunststoffweichmachern, wie Dibutylphthalat, Misch-Polymerisate von Vinylacetat mit Maleinsäuredibutylester, Vinylacetat mit Äthylen, Terpolymerisate von Vinylacetat mit Äthylen und Vinylchlorid, Vinylacetat mit Äthylen und Acrylamid, Vinylacetat mit Äthylen und N-Methylolacrylamid, Mischpolymerisate von Acrylsäurebutylester mit N-Methylolacrylamid, Mischpolymerisate von Acrylsäurebutylester, N-Methylolacrylamid und Acrylsäure, Mischpolymerisate von Acrylsäurebutylester, N-Methylolacrylamid und/oder N-Methylolmethacrylamid und Acrylsäure, Mischpolymerisate von Acrylsäurebutylester, Methacrylsäuremethylester und Methylolmethacrylamid, Mischpolymerisate von Acrylsäurebutylester, Acrylnitril, N-Methylolacrylamid und Methacrylsäure, Mischpolymerisate von Acrylsäurebutylester, Acrylnitril, N-Methylolmethacrylamid und Acrylsäure, Mischpolymerisate von Acrylsäurebutylester, Styrol, Acrylnitril und N-Methylolmethacrylamid, Mischpolymerisate aus N-Methylolmethacrylamid und Butandioldiacrylat, Acrylsäuremethylester und Acrylsäurebutylester, Mischpolymerisate von Äthylacrylat, Acrylnitril und N-Methylolacrylamid, Mischpolymerisate von Butylacrylat, Vinylacetat mit N-Methylolacrylamid, Mischpolymerisate von Butylacrylat, Acrylnitril und N-Methylolacrylamid, Mischpolymerisate von Styrol, Butylacrylat und Acrylsäure, Naturlatex oder Syntheselatices aus Styrol mit Butadien.

Bevorzugte Polymerdispersionen sind Polyvinylacetat-Dispersionen (50 %ig), Mischpolymerisate von Vinylacetat mit Maleinsäuredibutylester, z.B. im Verhältnis 77/23, Mischpolymerisate Vinylacetat/Äthylen, z.B. im Verhältnis 84/16 oder 75/25, Mischpolymerisate Vinylacetat/Äthylen/Vinylchlorid z.B. im Verhältnis 51/15/34, Mischpolymerisate Vinylacetet/Äthylen/Acrylamid 80/18/2, Mischpolymerisate Vinylacetat/Äthylen/N-Methylolacrylamid 77/18/5, Mischpolymerisate von Styrol/Butylacrylat/Acrylnitril/Methacrylsäure/Acrylamid z.B. im Verhältnis 16:61:25:2:1 oder 25:53:25:2:1, Mischpolymerisate von Äthylacrylat/Acrylnitril/N-Methylacrylamid 6:3:1, Mischpolymerisate von Butylacrylat/Vinylacetat/N-Methylolacrylamid wie 50 % Polyvinylalkohol, 25 % Polyvinylacetat, 25 % Polyäthylen oder Butadien-Styrol-Latex (ca. 50 %) z.B. im Verhältnis 40:60 oder 35:60 + 3,5 Acrylsäure.

Derartige Kunststoffdispersionen werden auch als Rückenappretur bei Webteppichen für die griffgebende Verfestigung des Teppichs benutzt.

Bei Tufted-Teppichen erfolgt im allgemeinen anschließend noch eine Rückenbeschichtung mit Naturlatex, Syntheselatex-Dispersion z.B. auf Basis Butadien-Styrol 40:60 oder 60:40 oder 35:60 + 3,5 Acrylsäure oder Polyurethane verschiedener Zusammensetzung.

Die Ausrüstungsflotten, sowohl für den Vorstrich als auch für die Rückenbeschichtung bei Webteppichen, enthalten außerdem noch Verdicker. Der Verdicker hat bekanntlich den Zweck, die Appreturen physikalisch in einen Zustand zu versetzen, der es erlaubt, daß die Imprägnierflotten bei der Applikation nicht in die Polfäden durchschlagen und diese verkleben. Als Verdickungsmittel sind geeignet wasserlösliche Hydroxyäthylcellulosen, Methylcellulosen, Carboxymethylcellulosen, wasserlösliche Stärkeprodukte, teilveretherte oder veretherte Stärkeprodukte, Polyvinylalkohole, die Natrium- oder Ammoniumsalze der Alginsäure.

Der Vorstrich oder auch die Teppichrückenbeschichtung für Webteppiche kann außerdem wie üblich mit Kreide gefüllt werden.

Die Durchführung der erfindungsgemäßen Verfahren zur flammhemmenden Ausrüstung von Geweben, Gewirken, Non-wovenfabrics und Tufting- oder Webteppichen erfolgt unter Applikationsbedingungen, wie sie in der Textilindustrie üblich sind. Ein zusätzlicher Arbeitsgang ist nicht nötig.

Die Applikation der flammhemmenden Ausrüstungsflotten kann durch eine Foulardbehandlung, durch Rakeln oder Pflatschen erfolgen. Sie hängt vom Textilgut ab. Gewebe oder Gewirke werden im allgemeinen einer Foulardbehandlung unterworfen. Nadelvliese können sowohl am Foulard als auch mittels Rakel- oder Pflatschausrüstung behandelt werden.

Die Vorstrichimprägnierflotte oder die Rückenappretur für Webteppiche wird mit Hilfe einer Luftrakel, einer Gummituchrakel oder Zylinderrakel aufgebracht.

Anschließend wird getrocknet bzw. kondensiert. Die Baumwollgewebe werden zunächst einer Vortrocknung bei 80 - 120°C unterworfen und anschließend 4 - 5 Minuten bei 140 - 160°C getrocknet. Nadelvlies bzw. Tufting- oder Webteppiche werden bei 130 - 150°C getrocknet.

Den Ausrüstungsflotten können weitere Veredlungsmittel wie textile Weichmacher, Hydrophobierungsprodukte, Oleophobierungsmittel oder auch antimikrobielle Ausrüstungsprodukte zugesetzt werden.

Herstellungs-Beispiele

In den folgenden Beispielen bedeuten
MOP = 2-Methoxy-2-oxo-1-oxa-2-phospholan (1 Mol= 136,09)
EOP = 2-Ethoxy-2-oxo-1-oxa-2-phospholan (1 Mol= 150,12)
IBOP= 2-Isobutoxy-2-oxo-1-oxa-2-phospholan (1 Mol= 178,18)

Die eingesetzten 2-Alkoxy-2-oxo-1-oxa-2-phospholane der Formel

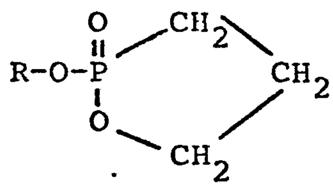

($R= CH_3$, $C_2H_5$ oder $i-C_4H_9$) führen im 1H-rauschentkoppelten 40,5 MHz 31-P-NMR Spektrum zu charakteristischen Signalen bei -48 bis -50 ppm, bezogen auf Phosphorsäure als internen Standard (Lösungsmittel $CDCl_3$). Die in den Beispielen beschriebenen Umsetzungsprodukte zeigen dieses Signal nicht mehr oder allenfalls in einer zu vernachlässigenden Intensität von maximal ca.5-8 %

Allgemeine Herstellungs-Vorschrift für die Beispiele 1-9: Die in der Tabelle I angegebene Gramm-Zahl (= A) an Alkoholen der Formel II wird mit der angegebenen Gramm-Zahl (= L) einer 33 %igen Lösung von Natrium-Methylat in Methanol und etwas Thymolphthalein-Indikator vermischt. Dann wird bei 30°C bei 1 m bar innerhalb von ca. 60 Minuten das Methanol in eine Kältefalle abgezogen.

Anschließend werden innerhalb der angegebenen Zutropf-Zeit unter Eiskühlung die zugegebenenen Mole (= B) der Phospholane III zugefügt. Dabei bleiben die Reaktionsgemische blau, d.h. stark alkalisch.
Es wird jeweils 30 Minuten bei der End-Reaktions-Temperatur nachgerührt. Dabei oder nach längerem Stehen bei Raumtemperatur nimmt die Alkalität allmählich von selbst ab und der Indikator entfärbt sich.

Allgemeine Herstellungs-Vorschrift für die Beispiele 10-18:

Die in der Tabelle II angegebenen A Gramm an Alkohol der Formel II und B Mole der Phospholane der Formel III und etwas Thymolphthalein-Indikator werden bei Raumtemperatur gemischt. Wenn der Alkohol II fest ist, wird (wie bei Beispiel 11) erhitzt bis eine klare Lösung auftritt und anschließend wieder abgekühlt. Dann wird bei der angegebenen Reaktionstemperatur unter Eiskühlung die angegebene Gramm-Menge (= K) an Katalysator (= 33 %ige Natrium-Methylat-Lösung in Methanol) in der Zutropf-Zeit zugefügt. Dabei tritt Blaufärbung auf. Trotz der Kühlung steigt dabei in vielen Fällen die Temperatur noch um einige Grad. Am Schluß wird noch 30 Minuten nachgerührt. Dabei oder nach längerem Stehen bei Raumtemperatur nimmt die starke Alkalität allmählich von selbst ab und der Indikator entfärbt sich. In den Beispielen 14 und 15 dient zusätzlich wasserfreies Tetrahydrofuran (THF) als Lösungsvermittler. Es wird am Ende der Reaktion nach dem Nachrühren wieder im Vakuum abgezogen.

Tabelle I

| Bsp. Nr. | Art des Alkohols der Formel II | A= Gramm Zahl an Alkohol II | Mol-zahl an Alkohol II | n= Hydroxylgruppen pro Alkohol | B= Mol-Zahl und Art des Phospholans III | Mol-Verhältnis (=MV) von Phospholanen III u. Alkoholen II | m= Oligomerisierungsgrad | Reakt.-Temp. in °C |
|---|---|---|---|---|---|---|---|---|
| 1 | $C_{18}H_{35}OH$ | 13,3 | 0,05 | 1 | 0,3 EOP | 6 | 6 | 12 - 16 |
| 2 | $C_{18}H_{35}OH$ | 13,3 | 0,05 | 1 | 0,15 EOP | 3 | 3 | 12 - 14 |
| 3 | $HO-(C_2H_4-O)_{13}-H$ | 30 | 0,05 | 2 | 0,2 EOP | 4 | 2 | 12 - 14 |
| 4 | $C_6F_{13}-C_2H_4-OH$ | 18,1 | 0,05 | 1 | 0,2 EOP | 4 | 4 | 8 - 10 |
| 5 | $HO-C_2H_4-OH$ | 12,4 | 0,2 | 2 | 0,2 EOP | 2 | 1 | 12 |
| 6 | $HO-CH_2-CH=CH-CH_2OH$ | 8,8 | 0,1 | 2 | 0,2 EOP | 2 | 1 | 15 |
| 7 | $C_{18}H_{35}OH$ | 26,8 | 0,1 | 1 | 0,2 EOP | 2 | 2 | 15 |
| 8 | $HO-C_2H_4-O-CO-NH_2$ | 42 | 0,4 | 1 | 0,44 EOP | 1,1 | 1,1 | 12 - 23 |
| 9 | $HO-C_2H_4-O-CO-C(CH_3)=CH_2$ | 52 | 0,4 | 1 | 0,44 EOP | 1,1 | 1,1 | 16 - 20 |

Zu Tabelle I

| Bsp. Nr | Zutropf-Zeit von Phospholan III in Min. | L= Gramm-Zahl an $NaOCH_3$ Lösung | Mole an Alkali (Na) | End-Produkt-Daten P-Gehalt in % | Hydroxyl-Zahl | $n_D^{20}$ | Eigenschaften |
|---|---|---|---|---|---|---|---|
| 1 | 25 | 2 | 0,0122 | 15,5 | 57 | 1,4682 | gelbes wenig viskoses Öl, in $H_2O$ klar löslich schäumt |
| 2 | 15 | 2 | 0,0122 | 12,2 | 75 | 1,4672 | gelbliches, wenig viskoses Öl in $H_2O$ trüb löslich |
| 3 | 15 | 1 | 0,0061 | 10,3 | 91 | 1,4671 | farbloses wenig visk. Öl |
| 4 | 20 | 1 | 0,0061 | 12,7 | 56 | 1,4192 | gelbliches wenig visk. Öl in $H_2O$ klar löslich, schäumt |
| 5 | 6 | 1 | 0,0061 | 13,3 | 537 | 1,4644 | gelbliches, wenig visk. Öl |
| 6 | 14 | 1 | 0,0061 | 16,7 | 287 | 1,4810 | farbloses wenig visk. Öl |
| 7 | 25 | 1 | 0,0061 | 11,4 | 93 | 1,4711 | gelbes, mittelvisk. Öl, in $H_2O$ trüb löslich |
| 8 | 180 | 4 | 0,024 | 11,9 | 231 | 1,4674 | farbloses, mittelvisk. Öl |
| 9 | 33 | 2 | 0,024 | 12,2 | 216 | 1,4674 | farbloses, wenig visk. Öl |

Tabelle II

| Bsp. Nr. | Art des Alkohols der Formel II | A= Gramm Zahl an Alkohol II | Mol-zahl an Alkohol II | n= Hydroxylgruppe pro Alkohol | B= Mol-Zahl und Art des Phospholans III | Mol-Verhältnis (=MV) von Phospholanen III u. Alkoholen II | m= Oligomerisierungsgrad | Reakt.-Temp. in °C |
|---|---|---|---|---|---|---|---|---|
| 10 | $C_{18}H_{35}OH$ | 6,7 | 0,025 | 1 | 0,2 MOP | 8 | 8 | 9 - 30 |
| 11 | $C(-CH_2OH)_4$ | 13,6 | 0,1 | 4 | 0,8 MOP | 8 | 2 | 18 - 26 vorher bei 90°C gelöst) |
| 12 | $CH_3OH$ | 0,53 (im Katalysator) | 0,016 | 1 | 0,2 MOP | 12,5 | 12,5 | 15 - 25 |
| 13 | $CH_3OH$ | 0,66 (im Katalysator) | 0,021 | 1 | 0,2 EOP | 9,5 | 9,5 | 8 - 20 |
| 14 | $4-C_6H_5-C_6H_4-O-C_2H_4OH$ | 11,7 | 0,05 | 1 | 0,1 EOP | 2 | 2 | 20 - 30 (vorher bei 30° in 20 g THF gelöst) |
| 15 | $CH_3$<br>$C-(C_6H_4-O-C_2H_4OH)_2$<br>$CH_3$ | 15,8 | 0,05 | 2 | 0,1 EOP | 2 | 1 | 16 - 24 (vorher bei 40° in 20 g THF gelöst) |
| 16 | $HO-C_2H_4-NH_2$ | 3,05 | 0,05 | 1 | 0,1 EOP | 2 | 2 | 10 - 22 |
| 17 | $CH_3OH$ | 0,67 (im Katalysator) | 0,021 | 1 | 0,12 IBOP | 5,7 | 5,7 | 10 - 20 |
| 18 | $C_{18}H_{37}OH$ | 5,4 | 0,02 | 1 | 0,12 IBOP | 6 | 6 | 33 - 55 |

Zu Tabelle II

| Bsp. Nr. | Zutropf-Zeit von $NaOCH_3$-Lösg. in Min. | K= Gramm-Zahl an $NaOCH_3$ Lösung | Mole an Alkali (Na) | End-Produkt-Daten P-Gehalt in % | Hydroxyl-Zahl | $n_D^{20}$ | Eigenschaften |
|---|---|---|---|---|---|---|---|
| 10 | 1 | 0,5 | 0,0031 | 17,0 | 49 | 1,4732 | gelbliches mittelvisk. Öl klar in $H_2O$ lösl. schäumt |
| 11 | 8 | 1,0 | 0,0061 | 19,9 | 190 | 1,4776 | farblose, mittelvisk. Öl |
| 12 | 1 | 0,8 | 0,0049 | 22,0 | 33 | 1,4748 | gelbliches mittelvisk. Öl |
| 13 | 5 | 0,9 | 0,0055 | 20,0 | 35 | 1,4679 | gelbliches mittelvisk. Öl |
| 14 | 2 (THF wird nach Nachrühren abgezogen) | 2,0 | 0,0122 | 11,4 | 107 | 1,5418 | gelbliche sehr viskose Paste nach Abziehen des THF |
| 15 | 20 (THF wird nach Nachrühren abgezogen) | 0,7 | 0,0043 | 10,2 | 171 | 1,5278 | gelbliche sehr viskose Paste nach Abziehen des THF |
| 16 | 8 | 0,8 | 0,0049 | 16,3 | 162 | 1,4652 | farbloses wenig viskoses Öl |
| 17 | 1 | 1,0 | 0,0061 | 16,5 | 49 | 1,4628 | farbloses mittelviskoses Öl, unlöslich in $H_2O$ |
| 18 | 2 | 1,1 | 0,0067 | 13,1 | 92 | 1,4618 | farblose Paste |

Beispiel 19 : (n= 3, MV= 16; m= 5,33)

Zu 108,8 g (0,8 Mol) MOP kommen bei 12°C innerhalb von 8 Minuten unter Eiskühlung 5 g (= 4,75 g = 0,01 Mol Na und 0,05 Mol Glyzerin) einer von Methanol befreiten Natrium-Glyzerinat-Lösung hergestellt aus 122,7 g (0,75 Mol $NaOCH_3$) einer 33 %igen Natriummethyl-Lösung in Methanol und 345 g (3,75 Mol) wasserfreiem Glyzerin. Dabei steigt die Temperatur trotz Kühlung auf 27°C zu. Nach 30 Min. Nachrühren bei 25°C resultieren ca. 114 g einer gelblichen, stark viskosen Öls mit folgenden Daten:
P= 21,5 %; OHZ= 45; $n_{20}^{D}$ = 1,4784

Beispiel 20: (n= 3, MV= 5,55, m= 1,85)

Zu 85,6 g (0,4 Mol) IBOP kommen bei 20°C unter Eiskühlung innerhalb von 15 Minuten 7 g (= 0,072 Mol Glyzerin) der in Beispiel 21 beschriebenen Natrium-Glyzerinat-Lösung. Dabei steigt die Temperatur trotz Eiskühlung auf 25°C an. Nach 30 Minuten Nachrühren resultieren 92,5 g eines gelblichen, mittelviskosen Öls, das in Wasser unlöslich ist.
P= 16,0 %, OHZ= 128, $n_D^{20}$= 1,4618

Verwendungs-Beispiele:

Beispiel 1

Eine Nadelvliesauslegeware (ca. 800 g/$m^2$), bestehend aus einer Lauffläche aus grobfädigen Polyamidfasern und einem feinfädigen Polyesterfaserkern im Mischungsverhältnis 35/65, wird mit einer wäßrigen Imprägnierlösung behandelt und auf einem Zweiwalzenfoulard auf ca. 100 % Flottenaufnahme abgequetscht.

Die Imprägnierlösung hat folgende Zusammensetzung:

250 g/l des Oligo-Adduktes aus Herstellungsbeispiel 19 (P = 21,5 %)
120 g/l eines 80 %igen Trimethylolmelamintrimethylesthers
300 g/l einer 50 %igen Polymerdispersion, bestehend aus Vinylacetat/Ethylen im Verhältnis 84:16
4,5 g/l Ammoniumchlorid.

Nach der Foulardbehandlung wird 20 Minuten bei 140°C getrocknet.

Die Nadelvliesauslegeware zeigt sehr gute flammhemmende Eigenschaften, die mehrere Feinwäschen bei 40 - 50°C und mehrere Shampoonierungen überstehen.
Die flammhemmenden Eigenschaften der so ausgerüsteten Nadelvliesauslegeware werden nach DIN 54 332 "Bestimmung des Brennverhaltens von textilen Fußbodenbelägen" und nach DIN 54 333 "Bestimmung der Flammausbreitungsgeschwindigkeit auf Textilien" bestimmt.

Wird der Nadelvliesprüfling nur mit 300 g/l der im Beispiel aufgeführten Polymerdispersion ausgerüstet, so brennt er nach DIN 54 332 nach Wegnahme der Prüfflamme (15 Sek. Einwirkungszeit) weiter. Dasselbe gilt bei der Prüfung nach DIN 54 333. Nach Wegnahme der Prüfflamme (15 Sek. Beflammungszeit) brennt der Prüfling in breiter Front weiter. Die Flammfront durchläuft eine Prüfstrecke von 10 cm in einer Zeit von 2 Minuten und 50 Sekunden.

Das mit der oben aufgeführten Imprägnierflotte behandelte Textilgut brennt dagegen bei Wegnahme der Prüfflamme sowohl nach DIN 54 332 als auch nach DIN 54 333 nicht weiter. Auch eine Erhöhung der Flammeinwirkungszeit von 15 auf 30 und 60 Sekunden ändert nichts an dem sehr guten Ergebnis. Die Prüflinge brennen nach so langen Einwirkungszeiten nach Wegnahme der Flamme nicht weiter.

Nach 3-5 Shampoonierungen bleiben die flammhemmenden Eigenschaften des Textilgutes voll erhalten. Es konnte weder nach DIN 54 332 noch nach DIN 54 333 ein Nachbrennen nach Wegnahme der Prüfflamme festgestellt werden.

Auch nach 3 Feinwäschen mit 1-2 g/l eines handelsüblichen Feinwaschmittels (Waschdauer jeweils 15 Minuten bei 35 - 40°C) bestanden die Prüflinge die flammhemmende Prüfung nach DIN 54 332 und DIN 54 333. Nach Wegnahme der Prüfflamme brannten die Nadelfilze nicht weiter.

Beispiel 2

Eine ca. 700 $g/m^2$ schwere Nadelvliesauslegeware, die aus einem feinfädigen Polypropylenkern und ca. 30 % Polyamidfaseranteil und einer grobfädigen Polypropylenfaser-Lauffläche besteht, wird auf einem Zweiwalzenfoulard mit einer wäßrigen Imprägnierlösung behandelt, die folgende Zusammensetzung hat:

300 g/l des im Beispiel 1 verwendeten Oligo-Addukts
150 g/l eines 80 %igen Trimethylolmelamintrimethylethers,
320 g/l einer 40 %igen Mischpolymerdispersion, bestehend aus Ethylacrylat/Acrylnitril/N-Methylolacrylamid (6:3:1),
10 g/l Zinkchlorid.

Der Abquetscheffekt beträgt ca. 95 %. Anschließend wird 20 Minuten bei 130°C getrocknet.

Die Nadelfilzauslegeware ist elastisch und zeigt ein gutes Abrollvermögen und einen trockenen Griff.

Die Nadelfilzauslegeware besitzt ebenfalls sehr gute permanente flammhemmende Eigenschaften nach DIN 54 332 und 54 333.

Nach Wegnahme der Prüfflamme brennt der Nadelfilz nicht weiter. Wird der Nadelfilz dagegen mit 320 g/l der 40%igen Mischpolymerdispersion, wie im Beispiel beschrieben, ausgerüstet, so brennt er nach DIN 54 333 in ca. 2 Minuten und 30 Sekunden innerhalb einer Prüfstrecke von 10 cm ab.

Gleichgute flammhemmende Effekte werden erhalten, wenn man die 10 g/l Zinkchlorid durch 25 g/l einer 40 %igen 2-Amino-2-methyl-propanol-hydrochloridlösung als Katalysator ersetzt.

Beispiel 3

Die im Beispiel 1 beschriebene Nadelvliesauslegeware wird mit folgender Imprägnierlösung behandelt:

480 g/l des Oligo-Addukts aus Herstellungs-Beispiel 3 (P= 10,3 %)
240 g/l eines 80 %igen Trimethylolmelamintrimethylethers
300 g/l einer 50 %igen Polymerdispersion, bestehend aus Vinylacetat/Ethylen (84:16)
5 g/l Ammoniumchlorid.

Die Behandlung erfolgt auf einem Zweiwalzenfoulard. Der Abquetscheffekt beträgt ca. 105 %. Getrocknet wird bei 140°C. Es wird eine sehr gute flammhemmende Nadelvliesauslegeware erhalten mit einem trockenen Griff und einer sehr guten Elastizität.

Die flammhemmenden Eigenschaften nach DIN 54 333 geprüft. Nach Wegnahme der Prüfflamme brannte der Prüfling nicht weiter. Der flammhemmende Effekt bleibt auch nach 3 Shampoonierungen bestehen. Nach der 3. Shampoonierung wird lediglich ein Nachflammen von 25 Sekunden festgestellt.

Beispiel 4

Mit einer Imprägnierlösung, bestehend aus

300 g/l des Oligo-Addukts aus Herstellungsbeispiel 1 (P= 15,5 %)
150 g/l eines 80 %igen Trimethylolmelamintrimethylethers
300 g/l einer 50 %igen Butadien-Styrol-Dispersion (60:40)
5 g/l Ammoniumchlorid,

wird eine Nadelvliesauslegeware, wie sie im Beispiel 1 beschrieben, auf einem Zweiwalzenfoulard behandelt. Der Abquetscheffekt beträgt ca. 98 %. Anschließend wird bei 140°C getrocknet.

Die Nadelvliesauslegeware zeigt sehr gute flammhemmende Eigenschaften und einen elastischen Griff. Nach 2 Shampoonierungen kann nach DIN 54 333 nach Wegnahme der Prüfflamme (15 Sekunden) ein kurzes Nachflammen von 12 Sekunden festgestellt werden.

Beispiel 5

Eine Tufting-Teppichauslegeware, 600 g/$m^2$, mit einem PA-Flor, geschnitten, 6 mm hoch, auf einem Trägermaterial aus vorvernadeltem Polypropylenvlies wird mit folgender Vorstrich-Imprägnierlösung behandelt:

180 Teile der im Verwendungsbeispiel 1 eingesetzten Oligo-Addukts
90 Teile eines 80 %igen Trimethylolmelamintrimethylethers
180 Teile einer 50 %igen Butadien-Styrol-Dispersion (60:40)
280 Teile Kreide
300 Teile einer 2 %igen Methyl-hydroxyethylcelluloselösung
5 Teile Ammoniumchlorid.

Der Vorstrich wird mit Hilfe einer Handrakel aufgebracht und 20 Minuten getrocknet. Die Trockenauflage beträgt ca. 700 g/$m^2$.

Der so flammhemmende ausgerüstete Tufted-Teppich ist für die Auslegung von Innenräumen und Kofferräumen für Personenautos bestimmt. Er zeigt einen flexiblem und trocknen Griff. Die Florfäden sind im Grundgewebe sehr gut verfestigt und zeigen ihre ursprüngliche Beweglichkeit. Die Imprägnierlösung für den Vorstrich ist nicht in den Flor eingedrungen.

Die flammhemmenden Eigenschaften des ausgerüsteten Tufted-Teppich werden nach DIN 54 333 geprüft. Im Vergleich hierzu wird ein Abschnitt der oben beschriebenen Tuftedware mit einem Vorstrich mit Hilfe der Handrakel behandelt, der keine flammhemmenden Bestandteile enthält. Die Einbindung der Florfäden erfolgt wieder mit der 50 %igen Butadien-Styrol-Dispersion (60:40) unter Zusatz von Kreide und Methyl-hydroxyethylcelluloselösung als Verdicker.

Der nicht flammhemmende ausgerüstete Teppich brennt nach der Wegnahme der Prüfflamme ab. Der flammhemmende ausgerüstete Teppichabschnitt zeigt nach Wegnahme der Prüfflamme kein Weiter- oder Nachbrennen.

Der flammhemmende Effekt ist auch noch nach 5 Shampoonierungen feststellbar und voll erhalten.

<u>Beispiel 6</u>

Die im Beispiel 4 beschriebene Tufting-Teppichauslegeware wird mit folgender Vorstrich-Imprägnierflotte behandelt:

250 Teile des Oligo-Addukts aus Herstellungsbeispiel 8 (P= 11,9%)
125 Teile eines 80 %igen Trimethylolmelamintrimethylethers
180 Teile einer 50 %igen Polymerdispersion, bestehend aus Vinylacetat/Ethylen im Verhältnis 84:16
280 Teile Kreide
265 Teile einer 2 %igen Methyl-hydroxyethylcelluloselösung
5 Teile Ammoniumchlorid.

Der Vorstrich wird wieder mit einer Handrakel aufgebracht und 25 Min. bei 140°C getrocknet. Die Trockenauflage be-

trägt ca. 750 $g/m^2$.

Die so behandelten Tuftingteppiche haben sehr gute flammhemmende Eigenschaften, die mehrere Shampoonierungen überstehen. Die Vorstrichausrüstung verleiht dem Teppich einen flexiblen elastischen Griff. Die Florfäden sind im Grundvlies gut verfestigt.

Beispiel 7

Die im Beispiel 1 beschriebene Nadelvliesauslegeware (PA/PES) wird mit einer Imprägnierlösung folgender Zusammensetzung auf einem Zweiwalzenfoulard behandelt:

350 g/l des Oligo-Addukts aus Herstellungsbeispiel 20
(P= 16,0%)
180 g/l eines 80 %igen Trimethylolmelamintrimethylethers
300 g/l einer 50 %igen Butadien/Styrolpolymerdispersion
(60:40)
5 g/l Ammoniumchlorid.

Der Abquetscheffekt beträgt ca. 105 %. Getrocknet wird bei 145°C.

Die flammhemmende Prüfung des so ausgerüsteten Textilgutes ergab nach DIN 54 332 sehr gute Werte. Nach Wegnahme der Prüfflamme brannte der Nadelfilz nicht weiter. Der flammhemmende Effekt überdauerte mehrere Shampoonierungen. Die Nadelvliesauslegeware ist elastisch und besitzt ein sehr gutes Abrollvermögen.

Patentansprüche:

1. Organische Phosphor-Verbindungen mit 3-Hydroxyalkylphosphonsäureestergruppen der allgemeinen Formel I

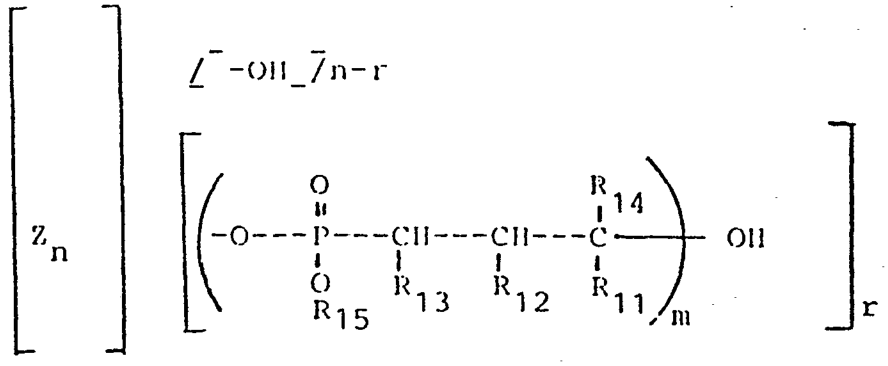

wobei die einzelnen Symbole in der obigen Formel I folgende Bedeutung haben:

n ist eine ganze Zahl von 1 bis 6, vorzugsweise 1 bis 4;

r ist eine ganze Zahl von 1 bis n, also von 1 bis 6, vorzugsweise die gleiche Zahl wie n;

m ist 1, wenn $r < n$ ist oder eine Zahl von 1 bis 150, bevorzugt 2 bis 10, wenn $r = n$ ist;

$R_{11}$, $R_{12}$, $R_{13}$, $R_{14}$ sind gleiche oder verschiedene gegebenenfalls ungesättigte und/oder verzweigte Alkylreste mit 1 bis 4 Kohlenstoffatomen oder bevorzugt Wasserstoff;

$R_{15}$ hat die gleiche Bedeutung wie $R_{11}$ außer Wasserstoff, bevorzugt $(C_1-C_4-)$Alkyl, besonders bevorzugt Methyl;

$Z_n$ ist ein n-wertiger Rest aus der Gruppe geradkettiger oder verzweigter aliphatischer oder araliphatischer Kohlenwasserstoffreste mit 1 bis 22, vorzugsweise 1 bis 8 C-Atomen, die gegebenenfalls durch bis zu 2 -S- und/oder $NH_2$-Reste mit $R_2$= $(C_1-C_4-)$Alkyl, insbesondere Methyl, unterbrochen und/oder durch Fluor, Chlor, Brom-Atome, oder gegebenenfalls ungesättigte Carbonsäureestergruppen

oder Carbonamid-, Carbamat- oder Harnstoffgruppen oder durch primäre, sekundäre bzw. tertiäre Aminogruppen substituiert sein können; oder ein äthergruppenhaltiger Kohlenwasserstoffrest mit Äquivalent-Gewichten bis zu 8000, bevorzugt bis zu 4000, der sich durch Oxäthylierung oder/und Oxpropylierung von n-wertigen aliphatischen, araliphatischen oder aromatischen Hydroxyl-Verbindungen, Aminen oder/und Mono- bzw. Dicarbonsäuren mit 1 bis 22, vorzugsweise 1 bis 10, C-Atomen ergibt, wobei die araliphatischen bzw. die aromatischen Reste sich von Benzol, Alkyl- bzw. Alkylenbenzolen mit bis 18 C-Atomen, Naphthalin, Diphenyl, Diphenylmethan, Diphenyläthan oder 2,2-Diphenylpropan ableiten, und gegebenenfalls im Kern durch 1 oder 2 Methoxy- bzw. Äthoxygruppen bzw. im Kern und/oder in den Seitenketten durch F-, Cl-, Br-Atome, vorzugsweise bis fünfmal substituiert sein können; oder ein phosphorhaltiger Rest der allgemeinen Formel

$$R_2-(O)_{d_1}---\overset{\displaystyle R_1}{\underset{\displaystyle O}{\overset{|}{\underset{\|}{P}}}}-(O)_{d_1}---R_3 \qquad Z_{n,1}$$

in dem

$d_1$ unabhängig voneinander 0 und 1 und

$R_1$ Alkyl-, Hydroxyalkyl-, gegebenenfalls $(C_1-C_2)$-alkyliertes bzw. -dialkyliertes Aminoalkyl, Halogen-(vorzugsweise Cl-)alkyl mit 1 bis 3 C-Atomen, Alkenyl mit 2 oder 3 C-Atomen oder Phenyl, das gegebenenfalls durch 1 oder 2 Habgenatome, vorzugsweise Cl, Br substituiert sein kann, sind und

$R_2$,$R_3$ das gleichewie $R_1$ bedeuten mit der Einschränkung, daß mindestens einer der Reste $R_2$ oder $R_3$ ein Alkylenrest mit 2 - 5 C-Atomen ist;

oder ein phosphorhaltiger Rest der Formel:

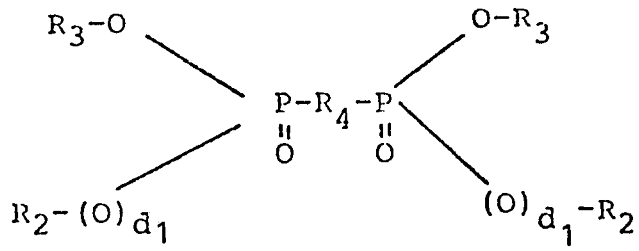

$Z_{n,2}$

in dem $d_1$, $R_2$, $R_3$ Bedeutungen wie in $Z_{n,1}$ haben und $R_4$ einen geradkettigen oder verzweigten $(C_1-C_{10}-)$Alkylen-, Phenylen-, Xylylen-Rest oder einen Rest

$-\overset{R_5}{\underset{Y}{C}}-$ mit Y = OH, $NH_2$ und $R_5$ $(C_1-C_3-)$Alkyl bedeuten:

oder ein phosphorhaltiger Rest der allgemeinen Formel

$$-CHR_{10}-CHR_9-O-\underset{\underset{O}{\|}}{C}-CHR_7-CHR_8-\underset{\underset{O}{\|}}{\overset{R_6}{P}}-O-CHR_9-CHR_{10}- \qquad Z_{n,3}$$

in dem

$R_6$ eine $(C_1-C_4)$-Alkylgruppe, die gegebenenfalls durch Halogen, insbesondere Chlor, substituiert, vorzugsweise einmal substituiert sein kann, eine Cycloalkylgruppe mit bis zu 8 C-Atomen, insbesondere Cyclopentyl, Cyclohexyl, eine Alkenylgruppe mit bis zu 4 C-Atomen, insbesondere Vinyl und Allyl, eine Phenyl oder Benzylgruppe, die gegebenenfalls durch Halogen, vorzugsweise Chlor und/oder Brom, substituiert, vorzugsweise 1- bis 3-mal substituiert sein kann,

$R_7$ Wasserstoff oder eine $(C_1-C_4)$-Alkylgruppe, bevorzugt Methyl,

$R_8$ Wasserstoff oder eine $(C_1-C_2)$-Alkylgruppe, bevorzugt Methyl, wobei mindestens einer der Reste $R_7$, $R_8$ Wasserstoff ist,

$R_9$ Wasserstoff, Methyl, Chlormethyl,

$R_{10}$ Wasserstoff, Methyl oder Äthyl, vorzugsweise Wasserstoff bedeuten.

2. Verfahren zur Herstellung der Phosphor-Verbindungen gemäß Anspruch 1, dadurch gekennzeichnet, daß man 1 Mol einer Verbindung der allgemeinen Formel II

$$Z_n\ (OH)_n \qquad (II)$$

mit 1 bis n.25 Molen von in 2-Stellung substituierten 2-Oxo-1-oxa-2-phospholanen der allgemeinen Formel III

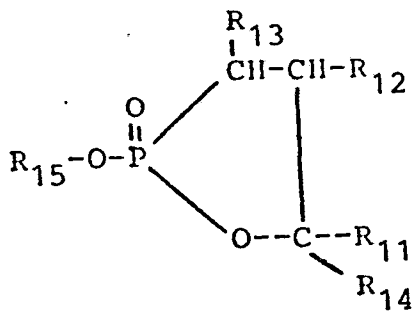

(III)

umsetzt, wobei n, $R_{11}$, $R_{12}$, $R_{13}$, $R_{14}$ und $R_{15}$ und $Z_n$ die in Anspruch 1 angegebenen Bedeutungen haben.

3. Verwendung der Phosphor-Verbindungen gemäß Anspruch 1 als Flammhemmittel für Textilmaterial.